# EUROPEAN PATENT APPLICATION

(11) **EP 1 593 560 A1**
(43) Date of publication of application: **09.11.2005**
(21) Application number: 04252672.3
(22) Date of filing: 07.05.2004
(51) Int. Cl.: B60R 22/40

(54) **Vehicle sensor for retractor**

(71) Applicant: KEY SAFETY SYSTEMS, INC., Sterling Heights, Michigan 48314 (US)
(72) Inventor: Bell, John, Carlisle, Cumbria CA8 1AX (GB); Jack, Brian, Annan DG12 6PR (GB)
(74) Representative: Freeman, Jacqueline Carol

(57) **Abstract**

A vehicle sensor (1) for a seat belt retractor safety restraint comprising an inertial member (2) mounted so as to move under the influence of acceleration and deceleration forces, a pivoted pawl adapted to engage teeth (8) in a ratchet wheel (8) of the retractor to lock the retractor against webbing payout, and a ring washer (6) resting on the upper part of the ball (2) and adapted to restrain the movement of the ball (2) so that it only moves when the level of acceleration or deceleration exceeds a predetermined threshold.

The inertial member (2) comprises a ball (2) fixedly mounted in a plastics material cup which is mounted to pivot under inertial forces such as occur in a vehicle crash by engagement of a narrow neck portion in a mounting hole in a base member.

## Description

The present invention relates to a vehicle sensor for a retractor for use in a vehicle occupant safety restraint.

Conventional seat belt retractors allow an occupant a reasonable degree of freedom for movement during normal driving conditions in order to provide a degree of comfort and allow the occupant to reach controls such as those for in car entertainment facilities. A seat belt retractor thus allows pay out of webbing when gentle tension is applied to the seat belt during normal operation, but will arrest the occupant's movement during an emergency situation. For this purpose a vehicle sensor detects a deceleration above a predetermined magnitude, which is indicative of an emergency situation, and causes the retractor to lock.

Known vehicle acceleration sensors comprise an inertial member such as a ball which moves when the vehicle rapidly decelerates, and activates a locking mechanism to lock the retractor against further payout of seat belt webbing.

Traditionally one version of a vehicle sensor comprises a steel ball resting in a plastic cup with a hinged lever resting on top of the ball. The ball is free to move in a hollow in the base of the cup. Acceleration or deceleration above a predetermined level causes the ball to ride up the curved side of the hollow and lift the hinged lever. This in turn rotates a vehicle sensor pawl which engages teeth in a ratchet wheel on the retractor assembly and causes a spool, holding the seat belt webbing, to lock. In this way payout of the webbing is prevented in an emergency and the occupant is safely restrained against uncontrolled movement.

The traditional vehicle sensor module thus has three parts; the plastic cup, the lever and the ball.

The movable parts such as the ball can create noise in a travelling vehicle because of natural vibrations. Noise hold out mechanisms (NHOMs) are known which hold the moveable parts of the sensor mechanism to prevent them from rattling and engaging other parts, thus reducing noise levels in the retractor.

According to the present invention there is provided a vehicle sensor for a seat belt retractor safety restraint comprising an inertial member mounted so as to move under the influence of acceleration and deceleration forces, a pivoted pawl adapted to engage teeth in a ratchet wheel of the retractor to lock the retractor against webbing payout, and means adapted to restrain the movement of the inertial member so that the inertial member only moves when the level of acceleration or deceleration exceeds a predetermined threshold.

Preferably the restraining means comprises a washer.

According to a preferred embodiment the inertial member comprises a ball fixedly mounted in a cup which is mounted so as to pivot under inertial forces such as occur in a vehicle crash. The cup may be formed of plastics material and may be in the form of an egg cup having a wide upper section adapted to receive the ball, and a narrow lower neck part adapted to fit in a mounting hole in a balanced manner so that it can tip in any direction in a plane generally parallel to the mounting hole. The washer may be a relatively simple traditional ring washer which rests on the upper part of the ball, and abuts the sensor lever. The washer may be fixedly attached to the lever or the ball. The ball may be formed of stainless steel or lead.

The ball effectively acts as the vehicle sensor mass and the upper curved surface of the ball takes the place of the activating lever in a traditional vehicle sensor.

For a better understanding of the present invention and to show how the same may be carried into effect, reference will now be made to the accompanying drawings, in which:
Figure 1 is a cross-section of part of a retractor incorporating a vehicle sensor according to one embodiment of the present invention;
Figure 2 is a view of part of the vehicle sensor of figure 1:
Figure 3 is a schematic cross sectional view of part of a vehicle sensor according to another embodiment of the invention.

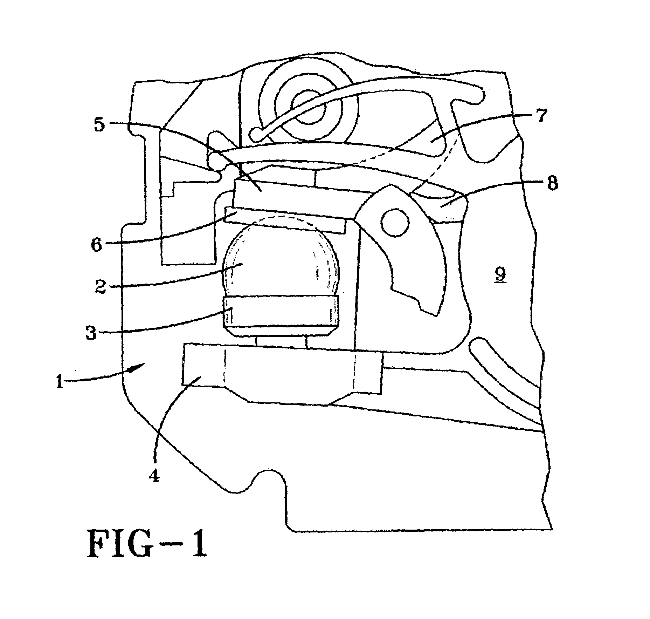

In figure 1 part of a standard seat belt retractor is shown with a vehicle sensor according to the invention illustrated generally at 1. The vehicle sensor 1 comprises a spherical steel or lead ball 2 mounted in a plastics cup 3. The plastics cup 3 is mounted in a vehicle sensor base 4 in a manner which allows pivotal movement.

The base 4 is formed of plastics material and has a mounting hole in its upper surface to receive the lower section of the cup 3.

A ring washer 6 rests on top of the steel ball 2 and a lever 5 rests on the top curved surface of the ball 2. Movement of inertial unit comprising the steel ball 2 the plastics cup 3 within the base mounting 4 causes the washer 6 and the lever 5 to lift thus rotating the other end 7 of lever 5 generally downwardly into engagement with teeth 8 which can just be seen in the cut-out in the retractor cover 9. The teeth 8 are formed in a ratchet wheel 8 connected to the spool of the retractor. When the lever 7 engages the ratchet wheel 8 the spool is locked and further rotation, and thus further payout of the seat belt webbing, is prevented.

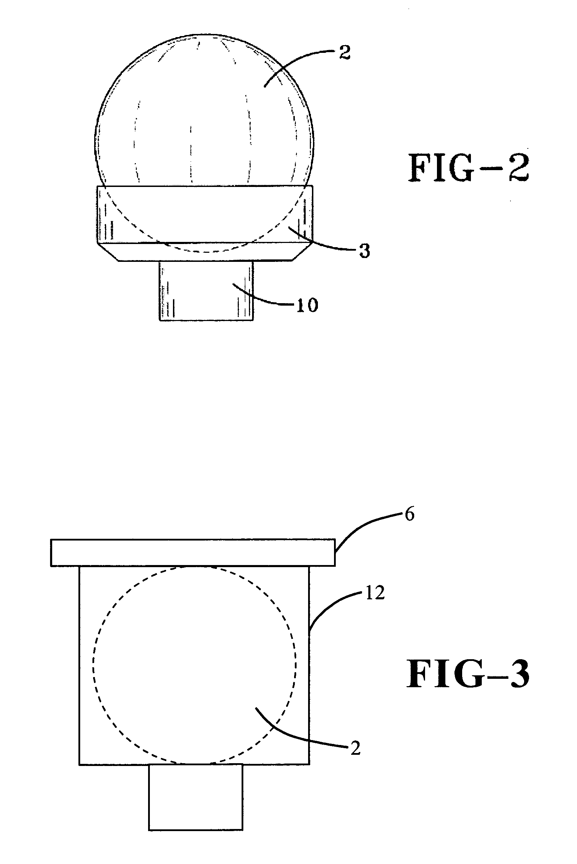

In figure 2 the vehicle sensor inertial unit is shown in more detail. The steel ball is shown at 2 and the plastics cup at 3. The plastics cup 3 has a narrow neck 10 which engages in the recess or hole in the vehicle sensor base mounting 4 to allow pivoting of the ball 2 and its cup 3 under inertial influences.

In figure 3 a different embodiment is shown in which the ball 2 is seated in a mass housing 12 with the washer 6 at the top of the housing 12. The ball 2 can be applied from the top to simplify the need for encapsulation when soft materials are needed to reduce noise further.

## Claims

1. A vehicle sensor for a seat belt retractor safety restraint comprising an inertial member mounted so as to move under the influence of acceleration and deceleration forces, a pivoted pawl adapted to engage teeth in a ratchet wheel of the retractor to lock the retractor against webbing payout, and means adapted to restrain the movement of the inertial member so that the inertial member moves when the level of acceleration or deceleration exceeds a predetermined threshold.

2. A vehicle sensor according to claim 1 wherein the restraining means comprises a washer.

3. A vehicle sensor according to claim 2 wherein the washer rests on the upper part of the inertial member.

4. A vehicle sensor according to claim 3 wherein the washer is a ring washer which abuts the inertial member on one side and the lever on the other side.

5. A vehicle sensor according to claim 3 or 4 wherein the washer is fixedly attached to the lever.

6. A vehicle sensor according to claim 3 or 4 wherein the washer is fixedly attached to the inertial member.

7. A vehicle sensor according to any one of the preceding claims wherein the inertial member comprises a ball fixedly mounted in a cup which is mounted to pivot under inertial forces.

8. A vehicle sensor according to claim 7 wherein the cup is formed of plastics material.

9. A vehicle sensor according to claim 7 or 8 wherein the cup is in the form of an egg cup having a wide upper section adapted to receive the ball, and a narrow lower neck part adapted to fit in a mounting hole in a balanced manner so that it can tip in any direction in a plane generally parallel to the mounting hole.

10. A vehicle sensor according to claim 9 wherein the mounting hole for the neck part is formed in a mounting base member.

11. A vehicle sensor according to any one of the preceding claims wherein the inertial member is formed of stainless steel.

12. A vehicle sensor according to any one of claims 1 to 10 wherein the inertial member is formed of lead.

## Amended claims

### Amended claims in accordance with Rule 86(2) EPC.

**1.** A vehicle sensor for a seat belt retractor safety restraint comprising a ball fixedly mounted in a pivoting cup, the cup being mounted so as to pivot under inertial forces, a hinged lever arranged to rotate a pivoted pawl adapted to engage teeth in a ratchet wheel of the reactor to lock the reactor against webbing payout, and a ring washer which abuts the upper part of the ball on one side and the lever on the other side, the washer being adapted to restrain the movement of the inertial member so that the ball and cup pivot when the level of inertial force exceeds a predetermined threshold.

**2.** A vehicle sensor according to claim 1 wherein the washer is fixedly attached to the lever.

**3.** A vehicle sensor according to claim 1 wherein the washer is fixedly attached to the inertial member.

**4.** A vehicle sensor according to any one of the preceding claims wherein the cup is formed of plastics material.

**5.** A vehicle sensor according to claim 4 wherein the cup is in the form of an egg cup having a wide upper section adapted to receive the ball, and a narrow lower neck part adapted to fit in a mounting hole in a balanced manner so that it can tip in any direction in a plane generally parallel to the mounting hole.

**6.** A vehicle sensor according to claim 5 wherein the mounting hole for the neck part is formed in a mounting base member.

**7.** A vehicle sensor according to any one of the preceding claims wherein the inertial member is formed of stainless steel.

**8.** A vehicle sensor according to any one of claims 1 to 6 wherein the inertial member is formed of lead.
